# FASCICULE DE BREVET EUROPEEN

(11) **EP 1 958 280 B1**
(45) Date de publication et mention de la délivrance du brevet: **29.02.2012**
(21) Numéro de dépôt: 06818260.9
(22) Date de dépôt: 16.10.2006
(51) Int. Cl.: H01M 8/02, H01M 8/04, H01M 8/24

(54) **PILE A COMBUSTIBLE A GESTION DE FLUIDES INTEGREE**
BRENNSTOFFZELLE MIT INTEGRIERTEM FLUID-MANAGEMENT
FUEL CELL WITH INTEGRATED FLUID MANAGEMENT

(30) Priorité: 18.10.2005 FR 0510693
(43) Date de publication de la demande: 20.08.2008
(60) Demande divisionnaire: 09016041.7
(73) Titulaire: MICHELIN Recherche et Technique S.A., 1763 Granges-Paccot (CH); PAUL SCHERRER INSTITUT, 5232 Villigen (CH)
(72) Inventeur: OLSOMMER, David, CH-1801 Le Mont Pelerin (CH); LAURENT, Daniel, CH-1723 Marly (CH); LEROY, Cédric, CH - 1092 Belmont (CH)
(74) Mandataire: Bauvir, Jacques
(86) Numéro de dépôt international: PCT/EP2006/009957
(87) Numéro de publication internationale: WO 2007/045416

(56) Documents cités:
- DE-A1- 10 223 353
- JP-A- 2001 143 734
- US-A- 3 982 961
- US-A- 5 079 105
- US-A- 6 159 629
- US-A1- 2004 247 984
- US-A1- 2005 053 824

## Description

### DOMAINE DE L'INVENTION

La présente invention concerne les piles à combustible. Plus particulièrement, elle concerne les circuits d'alimentation en gaz et en liquide de refroidissement d'une pile à combustible.

### ETAT DE LA TECHNIQUE

On sait qu'il faut alimenter la pile à combustible en hydrogène et en air ou en oxygène pur. En général, il faut la refroidir compte tenu des densités de puissance recherchées ; à cette fin, de préférence, on fait traverser la pile par un fluide caloporteur comme de l'eau. En outre, il faut contrôler certains paramètres importants de la gestion des gaz, comme leur pression, leur température, leur humidité, le taux de re-circulation de ces gaz. Cela requiert une installation de gestion des gaz assez complexe et volumineuse, en général aussi volumineuse que la pile elle-même.

Une pile à combustible comporte un empilage de plaques bipolaires et de membranes échangeuses d'ions disposées en alternance. L'empilage est enserré entre deux plaques d'extrémité. Les canalisations d'alimentation et de retour pour les fluides sont en général disposées parallèlement à la direction d'empilage et aboutissent aux plaques d'extrémité ou à l'une d'entre elles, où elles rejoignent des canalisations branchant l'empilage à ladite installation de gestion des gaz.

Par la demande de brevet JP 2001/143734, il est connu d'intégrer un dispositif à effet Venturi dans une plaque d'extrémité. D'autres agencements pour alimenter en fluide une pile à combustible sont illustrés par les documents US3982961, US5079105, US2005/0053824, DE10223353 et US6159629.

Par la demande de brevet US 2004/0247984, il est également connu d'intégrer à l'une des plaques dites d'extrémité des éléments de l'installation de gestion des fluides utilisés par la pile. Cependant, selon la technologie décrite, les éléments de gestion des fluides utilisés par la pile sont répartis entre plusieurs plaques qui sont disposées dans le sens de l'empilage, ce qui conduit à augmenter substantiellement l'encombrement de la pile dans le sens de l'empilage.

L'objectif de l'invention est de réduire l'encombrement de ladite installation de gestion des fluides, afin d'en faciliter l'implantation par exemple dans un véhicule.

Un autre objectif de l'invention est de concevoir une installation de gestion des fluides simple, dont la fabrication industrielle se prête bien à l'automatisation afin, entre autres avantages, de réduire les coûts de fabrication industrielle.

Afin de conférer à la pile à combustible une parfaite étanchéité et une conduction électrique uniformément répartie, l'empilage est comprimé par des tirants parallèles à la direction d'empilage et ancrés de part et d'autre aux plaques d'extrémités. Celles-ci doivent donc être robustes et conférer une pression suffisante et de préférence homogène sur toute la section des plaques bipolaires et membranes échangeuses d'ions. Les plaques d'extrémités doivent également supporter la pression des gaz présents dans le système.

### BREVE DESCRIPTION DE L'INVENTION

L'invention propose une plaque d'extrémité pour pile à combustible, la plaque d'extrémité comportant un bloc structurel comportant une face intérieure destinée à être mise en appui contre un empilage.de cellules élémentaires, comportant une face extérieure opposée à la face intérieure et une ou plusieurs face(s) périphérique(s), la face intérieure comportant au moins deux orifices destinés à l'alimentation d'un circuit situé dans la pile pour un gaz, le bloc structurel comportant une première chambre et comportant une canalisation d'alimentation aboutissant sur une paroi de la chambre, caractérisée en ce que :
- la première chambre est aménagée entre la face intérieure et la face extérieure, et est délimitée du côté de la face intérieure et de la face extérieure par une paroi du bloc structurel, la chambre étant allongée sensiblement parallèlement à la face intérieure, la chambre débouche sur une face périphérique, la chambre étant délimitée par au moins un bouchon monté sur ladite face périphérique ;
- un corps de recirculation est monté à l'intérieur de la chambre, positionné là où aboutit la canalisation d'alimentation, le corps de recirculation étant monté de façon étanche sur la paroi de la chambre pour séparer la chambre en une partie de recirculation du gaz aboutissant à l'un des orifices et une partie d'alimentation aboutissant à l'autre des orifices, le corps de recirculation comportant un élément de mélange permettant de mélanger le gaz neuf provenant de la canalisation d'alimentation et le gaz provenant de la partie de recirculation et permettant d'acheminer le mélange vers l'autre orifice.

Grâce à l'invention, il est possible d'intégrer auxdites plaques d'extrémité, de préférence à l'une des deux, une fonction de gestion des fluides en logeant une partie des éléments nécessaires à la gestion des fluides, de préférence tous les éléments jouant un rôle actif dans la gestion de tous les fluides. Cela se fait en augmentant l'épaisseur d'une telle plaque d'extrémité, ce qui ne peut être préjudiciable à la fonction mécanique de la ou des plaques d'extrémité, tout en permettant un usinage simple de la plaque d'extrémité et un montage simple et robuste de différents éléments à l'intérieur de celle-ci.

Cette solution offre des avantages importants en terme d'encombrement, de gain de poids, de fiabilité et même de coûts de fabrication. En outre, elle permet aisément la réalisation d'une interface entre pile à combustible et véhicule sur lequel est implanté la pile à l'aide de raccords auto obturants pour les fluides, et de connecteurs électriques enfichables. Avantageusement, les connecteurs électriques et les raccords peuvent être agencés de sorte que la pile, à laquelle est intégrée l'installation de gestion des fluides, puisse être aisément installée et retirée du véhicule, afin de faciliter l'entretien, la réparation ou le remplacement de la pile à combustible.

C'est en particulier grâce à la réalisation d'une chambre allongée et au montage d'un corps de recirculation à l'intérieur de la chambre, de façon étanche sur la paroi de la chambre, que l'on peut séparer la chambre en une partie d'alimentation en gaz aboutissant à l'un des orifices et une partie de recirculation du gaz aboutissant à l'autre des orifices. Ainsi, on peut intégrer sur une plaque d'extrémité de nombreux éléments comme par exemple ceux utilisés pour contrôler certains paramètres de fonctionnement. Il s'agit par exemple de pompes ou d'électrovannes de régulation de la pression d'un gaz. En outre, on peut monter ces éléments sur une chaîne de fabrication en série, le nombre de tuyaux extérieurs étant réduit au minimum.

Il est tout spécialement avantageux de monter dans ou d'intégrer sur l'une des plaques d'extrémité des éléments pour recycler les gaz non consommés par la pile. Il s'agit par exemple d'un dispositif à effet Venturi permettant, au moyen d'un débit de gaz neuf, d'aspirer le gaz sortant de la pile et de le faire recirculer dans celle-ci. De préférence, des éléments pour éliminer l'eau produite par la pile sont montés sur ou intégrés dans l'une des plaques d'extrémité.

Les éléments évoqués ci-dessus font partie d'un système de gestion de l'un des gaz. On peut associer les éléments de gestion d'un des gaz à l'une des plaques d'extrémité et associer les éléments de gestion de l'autre des gaz à l'autre des plaques d'extrémité ou l'on peut associer tous ces éléments à une seule des plaques d'extrémité comme dans l'exemple illustrant l'invention et décrit en détails ci-dessous. On peut même associer à une seule et même plaque d'extrémité non seulement les éléments de gestion des gaz mais en outre on peut très avantageusement lui associer les éléments de gestion d'un fluide caloporteur. Bien entendu, on peut répartir entre les deux plaques d'extrémité les éléments de gestion des fluides. On peut aussi répartir entre les deux plaques d'extrémité des éléments de gestion des gaz et des éléments de gestion d'un fluide caloporteur.

Comme on va le montrer dans l'exemple ci-dessous, il est possible de monter sur ou d'intégrer dans les plaques d'extrémité, même dans une seule de celles-ci, la totalité des éléments de l'installation de gestion de tous les fluides, gaz et fluide caloporteur. Bien entendu, il est déjà très avantageux de n'intégrer ou monter qu'une partie, de préférence la majorité des éléments de l'installation de gestion des fluides dans l'une des plaques d'extrémité ou dans les deux.

On peut appeler une telle plaque une « plaque - système ». Une telle plaque d'extrémité est ainsi configurée pour un circuit de gaz. Bien entendu, l'invention s'étend aussi à une plaque d'extrémité configurée pour comporter les éléments de gestion des deux gaz (hydrogène et oxygène par exemple), c'est-à-dire une plaque comportant deux configurations semblables à ce qui est décrit ci-dessus.

Selon un autre aspect de l'invention, celle-ci s'étend aussi à une plaque d'extrémité configurée pour la gestion du fluide caloporteur utilisé pour le refroidissement d'une pile à combustible. Une telle plaque d'extrémité pour pile à combustible, comportant un bloc structurel comportant une face intérieure destinée à être mise en appui contre ledit empilage, la face intérieure comportant au moins deux orifices destinés à être reliés à un circuit situé dans la pile pour un fluide caloporteur, est caractérisée en ce que le bloc structurel comporte une chambre formant nourrice d'alimentation en fluide caloporteur, permettant l'agencement suivant :
- la chambre formant nourrice est délimitée par une ou des parois du bloc structurel ;
- la chambre formant nourrice s'étend entre lesdits deux orifices ;
- une platine est positionné et montée à l'intérieur de la chambre formant nourrice, de façon étanche sur la paroi de la chambre, et comporte des moyens pour assurer la circulation du fluide caloporteur sélectivement vers lesdits orifices.

Enfin, l'invention s'étend également à une pile à combustible comportant un empilage de plaques bipolaires et de membranes échangeuses d'ions disposées en alternance, l'empilage étant enserré entre deux plaques d'extrémité, l'une des plaques d'extrémité étant une plaque-système.

### BREVE DESCRIPTION DES FIGURES

La présente invention sera mieux comprise grâce à la description détaillée d'un mode de réalisation et de quelques variantes, illustrés avec les figures jointes dans lesquelles :
La figure 1 est un schéma de principe d'un système comportant une pile à combustible et l'installation de gestion des gaz associée ;
La figure 2 est une vue schématique de côte d'une pile à combustible selon l'invention ;
La figure 3 est une vue de la pile à combustible selon la direction X à la figure 2 ;
La figure 4 est une vue de dessus de la pile à combustible de la figure 2 ;
La figure 5 est une perspective montrant la pile à combustible selon l'invention proche d'un support de réception associé à un véhicule, mais non connectée à celui-ci ;
La figure 6 est une autre perspective de la plaque d'extrémité de la figure 5, montrant le côté destiné à être plaqué contre l'empilage de cellules élémentaires ;
Les figures 7A, 7B, 7C et 7D montrent un bloc structurel permettant la réalisation de la plaque d'extrémité de la figure 6 ;

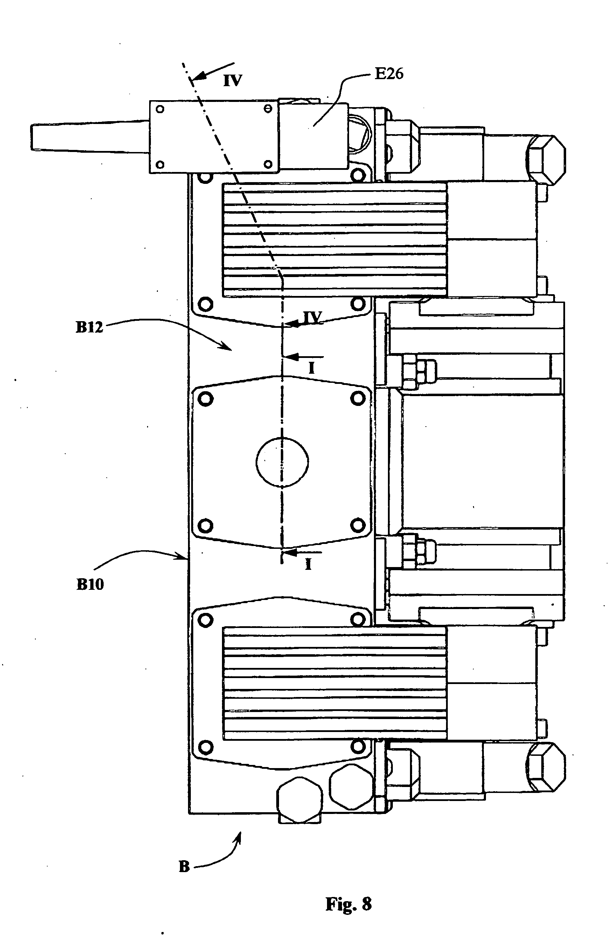

La figure 8 est une vue de dessus de la plaque d'extrémité de la figure 5 ;
La figure 9 est une coupe selon I-I à la figure 8 ;
La figure 10 est une vue de face de la plaque d'extrémité de la figure 5 ;
La figure 11 est une coupe selon III-III à la figure 10 ;
La figure 12 est une coupe selon II-II à la figure 10 ;
La figure 13 est une coupe selon IV-IV à la figure 8 ;
Les figures 14, 15 et 16 montrent schématiquement une variante avec pompe de circulation du fluide caloporteur et thermostat intégrés à une plaque d'extrémité, les moyens de gestion des gaz étant intégrés à l'autre des plaques d'extrémité.

### DESCRIPTION DES MODES DE REALISATION PREFERES DE L'INVENTION

Avant de débuter la description détaillée, l'attention du lecteur est attirée sur une convention de notation pour les repères aux figures. Les références débutant par la lettre « P » désignent un perçage, une canalisation, un alésage cylindrique, un trou ou un orifice sur une plaque d'extrémité. Prenons l'exemple d'un orifice par lequel un fluide entre dans une pile à combustible. On le désigne par « P7 » de façon générique, c'est-à-dire indistinctement quel que soit le fluide considéré. On termine la référence par la lettre « o » pour viser plus spécifiquement le gaz oxygène ou l'air, par la lettre « h » pour viser plus spécifiquement le gaz hydrogène et par la lettre « w » pour viser plus spécifiquement le fluide caloporteur. Les références débutant par la lettre « A » visent l'empilage de cellules élémentaires de la pile à combustible (communément désigné par « stack »). Les références débutant par la lettre « C » désignent un connecteur, électrique, pour gaz ou pour fluide caloporteur. Les références débutant par la lettre « E » désignent un élément appartenant au système de gestion d'un des fluides. Si une référence débutant par « E » n'est pas terminée par l'une des lettres « h », « o » ou « w », c'est que l'élément en question est unique, c'est-à-dire n'est pas dédié à un seul des fluides utilisés.

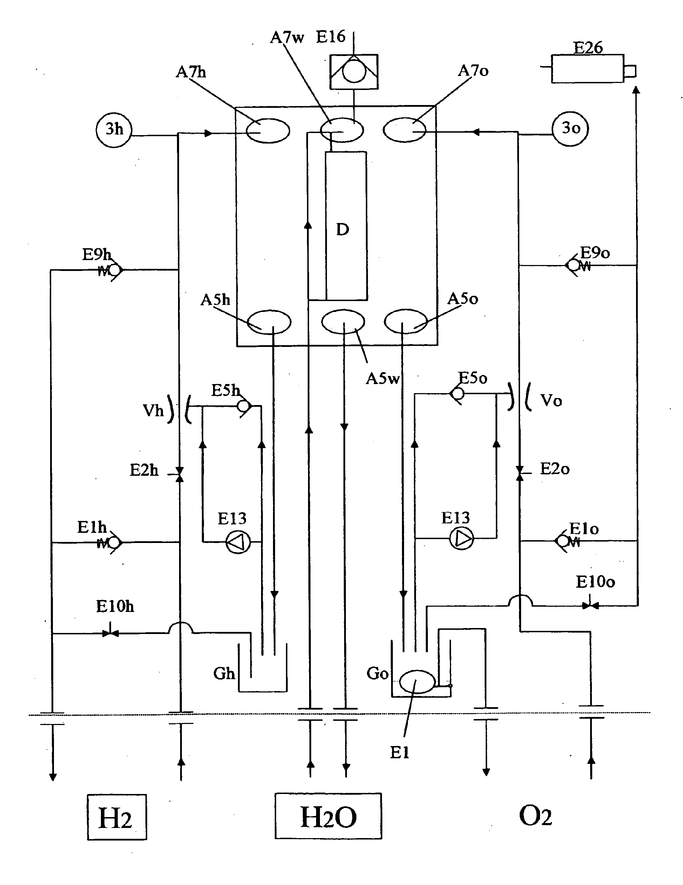

Sur le schéma de principe de la figure 1, on voit une pile à combustible FC comportant un empilage A de cellules élémentaires dont on voit un orifice d'entrée A7h et un orifice de sortie A5h d'un circuit d'hydrogène, un orifice d'entrée A7w et un orifice de sortie A5w d'un circuit d'eau utilisée comme fluide caloporteur et un orifice d'entrée A7o et un orifice de sortie A5o d'un circuit d'oxygène. On voit au bas de la figure tous les raccordements des gaz et d'eau, schématisés autour d'une ligne en pointillés.

On ne reviendra pas sur le fonctionnement d'une pile à combustible, supposé connu par le lecteur. Dans le présent mémoire, l'expression « pile à combustible » désigne un système comportant un empilage de cellules électrochimiques élémentaires et les éléments de gestion des fluides associés. Observons encore que l'exemple décrit ici porte sur une pile à combustible alimentée en oxygène pur. Dans le cas d'une pile à combustible alimentée en air ambiant comprimé, le circuit de gestion d'air comporterait, par rapport au circuit de gestion d'oxygène, quelques adaptations tout à fait compatibles avec la conception intégrée proposée par l'invention. Par exemple, le compresseur d'air pourrait ou non être intégré, de même que les moyens de contrôle de l'humidification de l'air.

La description suivante s'attache à montrer une topologie permettant d'intégrer à une plaque d'extrémité les éléments de gestion des fluides utilisés par une pile à combustible. Les éléments fonctionnels de l'installation de gestion du circuit d'hydrogène sont les suivants (voir figure 1) : un condenseur Gh, un dispositif à effet Venturi Vh, un clapet anti retour E5h, un régulateur électrique de pression E2h, une pompe E8h, un capteur de pression E3h, une soupape de surpression d'alimentation E1 h, une soupape de surpression E9h dans la pile à combustible et une électrovanne de purge E10h. Les éléments de l'installation de gestion du circuit d'eau sont les suivants : un désioniseur D et un purgeur automatique E16. Les éléments de l'installation de gestion du circuit d'oxygène sont les suivants : un condenseur Go, un Venturi Vo, un clapet anti-retour E5o, un régulateur électrique de pression E2o, une pompe E8o, un capteur de pression E3o, une soupape de surpression d'alimentation E1o, une soupape E9o de surpression dans la pile à combustible, une électrovanne de purge E10o et un flotteur E17 pour la régulation du niveau d'eau produite par le fonctionnement de la pile à combustible.

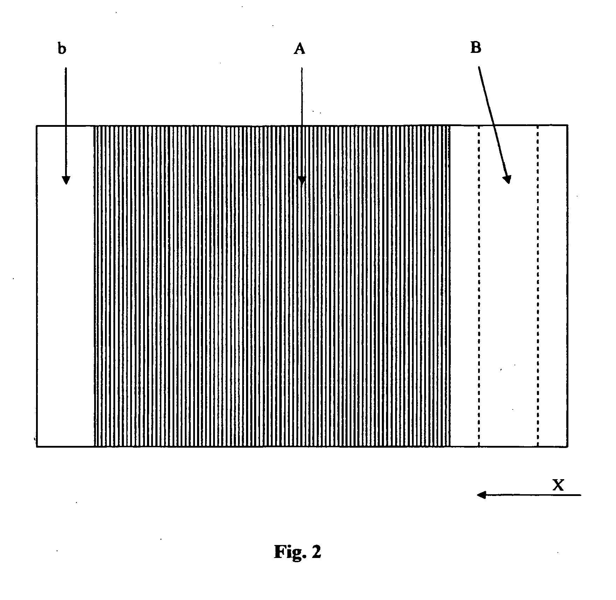

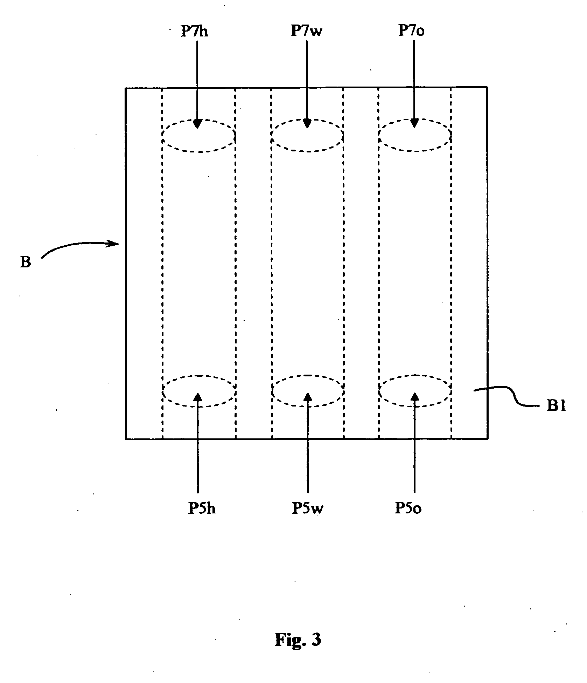

A la figure 2, on voit l'empilage A de cellules élémentaires de la pile à combustible. Rappelons simplement que les cellules élémentaires de l'empilage A comportent chacune une anode et une cathode séparées par une membrane échangeuse d'ions, le tout formant l'assemblage électrodes et membrane connu sous l'abréviation « MEA » (pour Membrane Electrode Assembly). Cet empilement est serré entre deux plaques d'extrémité B et b. Le serrage assure l'étanchéité du système, ainsi que le bon contact électrique entre les éléments. La figure 3 montre la plaque d'extrémité B et on reconnaît les orifices d'alimentation P7h, P7w et P7o et de recirculation P5h, P5w et P5o des circuits de gaz et d'eau agencés à l'intérieur même de la pile à combustible. L'orifice d'alimentation P7h du circuit d'hydrogène est monté sur l'orifice d'entrée A7h (voir figure 1) d'hydrogène de l'empilement A de cellules ; l'orifice de recirculation P5h du circuit d'hydrogène est monté sur l'orifice de sortie A5h d'hydrogène non consommé hors de l'empilage A de cellules élémentaires ; l'orifice d'alimentation P7w du circuit d'eau de refroidissement est monté sur l'orifice d'entrée A7w d'eau dans l'empilage A de cellules élémentaires ; l'orifice de recirculation P5w du circuit d'eau est monté sur l'orifice de sortie A5w d'eau de l'empilage A de cellules élémentaires ; enfin, l'orifice d'alimentation P7o du circuit d'oxygène est monté sur l'orifice d'entrée A7o d'oxygène de l'empilage A de cellules élémentaires et l'orifice de recirculation P5o du circuit d'oxygène est monté sur l'orifice de sortie A5o d'oxygène non consommé hors de l'empilement A de cellules.

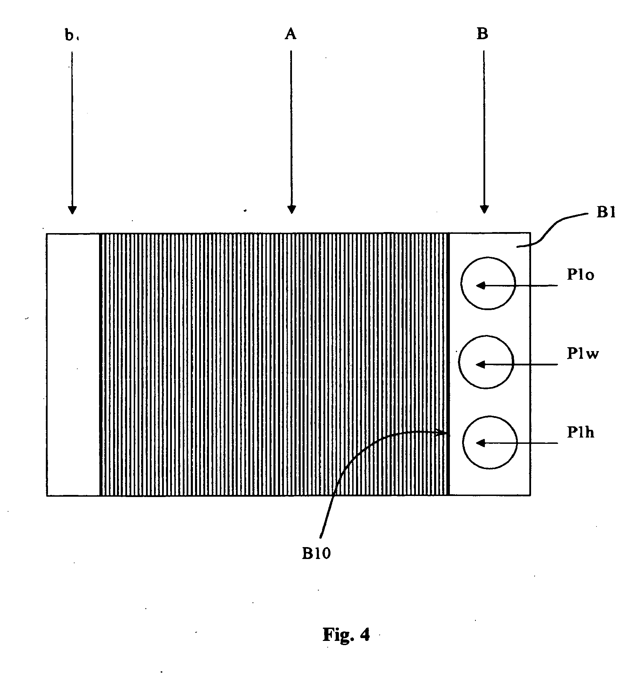

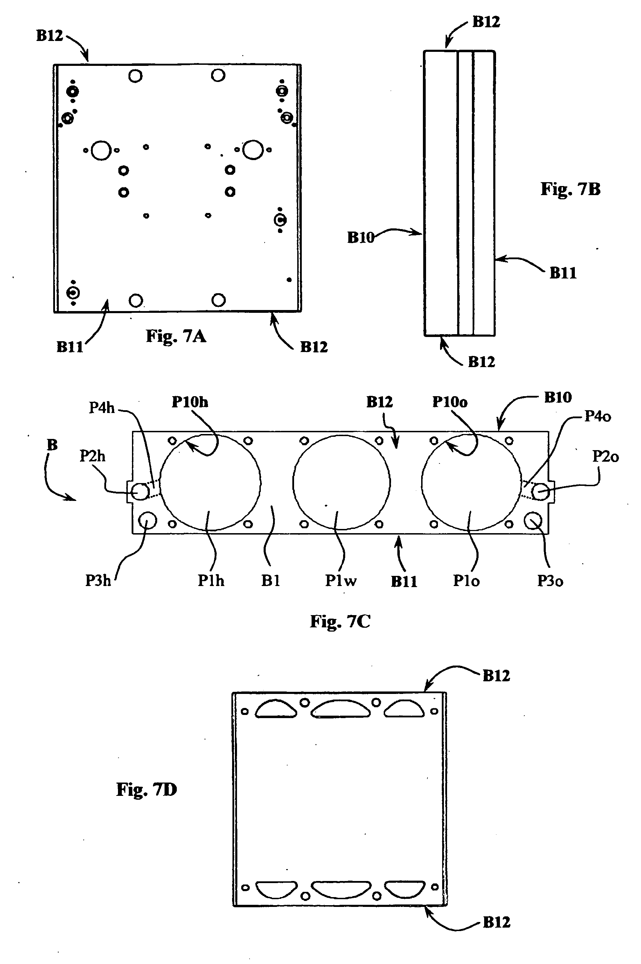

Selon la présente invention, le système de gestion des gaz et de l'eau de refroidissement est contenu dans la plaque d'extrémité B. La plaque d'extrémité B comporte un bloc structurel B1 d'épaisseur suffisante pour que l'on puisse y disposer trois chambres principales P1w, P1h et P1o, visibles en particulier aux figures 4 et 7C. Avantageusement, une chambre P1 est disposée sensiblement parallèlement à la face intérieure B10. De préférence, elle est sensiblement droite et de préférence encore, elle est de forme cylindrique. Les figures 7A, 7B, 7C et 7D permettent de bien faire comprendre un mode de réalisation non limitatif de la présente invention. On peut partir d'un bloc de matière sensiblement parallélépipédique et procéder par usinages. Les figures 7A, 7B, 7C et 7D montrent l'allure de la plaque d'extrémité B lorsque les perçages requis ont été réalisés, et avant d'avoir monté les éléments nécessaires à la constitution des systèmes de gestion des fluides. On voit bien que la conception de l'intégration se prête bien à une fabrication en séquences successives, en regroupant toutes les opérations de même nature dans une même séquence.

Pour ne pas obscurcir la suite de la description avec des détails inutiles, on n'aborde pas la totalité des opérations d'usinage et de montage requises pour réaliser une plaque système fonctionnelle. On s'attache à expliquer le principe de conception de l'intégration d'un ou des systèmes de gestion à une plaque d'extrémité et les détails précis, qui dépendent d'ailleurs du schéma précis du ou des systèmes de gestion des fluides, peuvent bien entendu varier. On peut partir d'un bloc filé qui comporte déjà tous les perçages parallèles à la direction selon laquelle le matériau constitutif, par exemple de l'aluminium, a été filé. On pourrait aussi réaliser un bloc par fonderie.

Ainsi, de préférence, toutes les canalisations d'alimentation et d'évacuation P2, P3 sont aménagées entre la face intérieure B10 et la face extérieure B11, sont allongées sensiblement parallèlement à la face intérieure B10, et débouchent sur la même face périphérique B12 que la ou les chambre(s) P1.

Quels que soient les procédés, avantageusement, on cherche à réaliser trois chambres principales P1w, P1h et P1o qui forment des cavités parallèles (voir en particulier la figure 3), qui débouchent au moins d'un côté, c'est-à-dire sur une face périphérique et même des deux côtés, ce qui est favorable à un montage aisé des éléments de gestion des fluides. A l'intérieur des cavités parallèles, on va monter des éléments et on va raccorder des canalisations et éléments permettant de construire les trois systèmes de gestion respectivement pour un circuit d'hydrogène, un circuit pour le fluide caloporteur et un circuit d'oxygène.

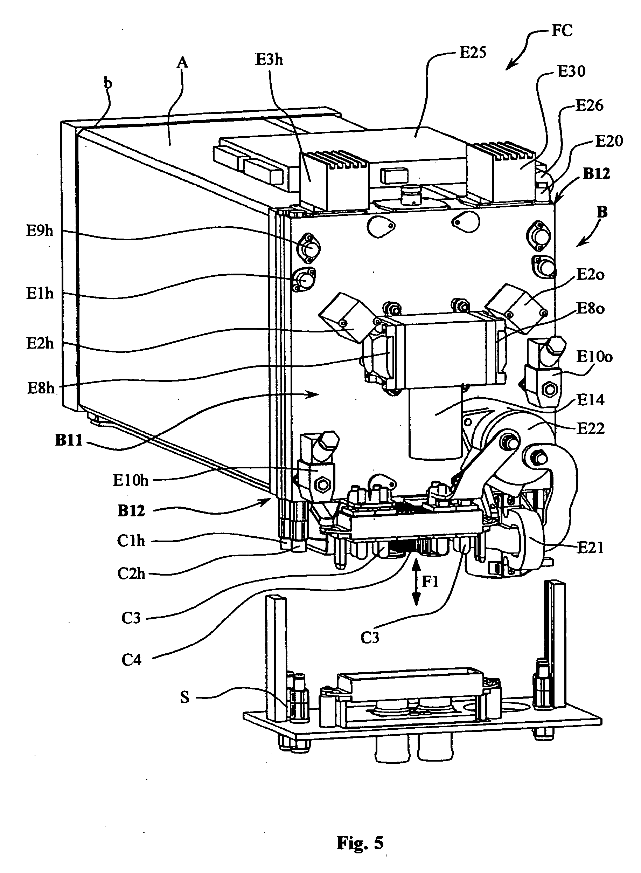

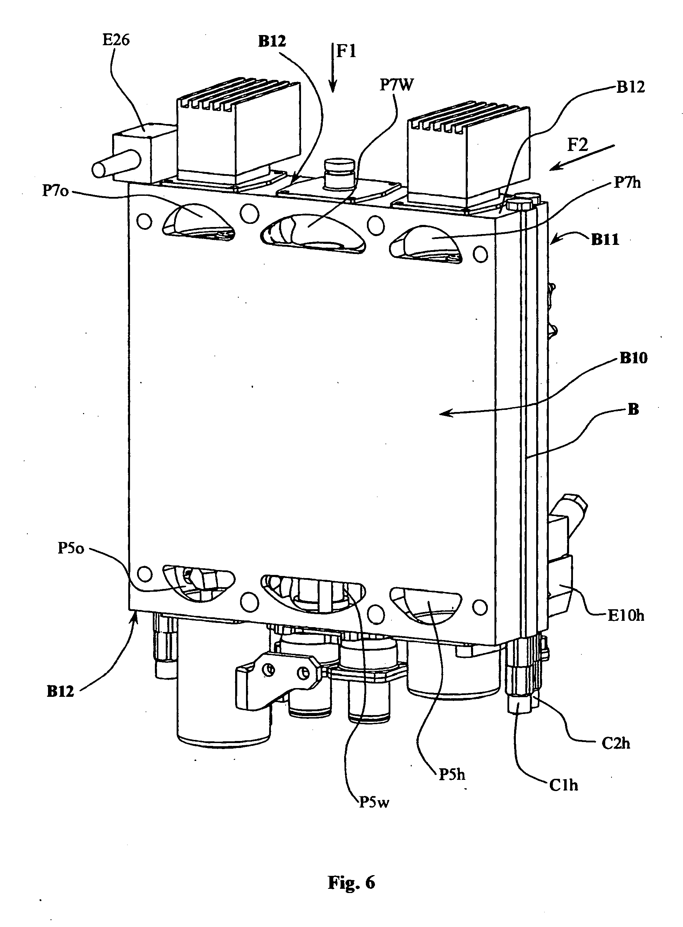

A la figure 6, on voit la face intérieure B10 de la plaque d'extrémité B selon l'invention, destinée à être mise en appui contre ledit empilage. Cette face intérieure comporte deux orifices P7h et P5h destinés à l'alimentation d'un circuit d'hydrogène parcourant l'empilage A de cellules électrochimiques élémentaires, deux orifices P7o et P5o destinés à l'alimentation d'un circuit d'oxygène et deux orifices P7w et P5w destinés à l'alimentation d'un circuit de fluide caloporteur. L'ensemble de la face extérieure B11 et de la ou des face(s) périphérique(s) B12 sont libres de tout contact avec l'empilage A de cellules électrochimiques élémentaires. Cela permet de monter sur ces faces plusieurs des éléments nécessaires à la constitution des systèmes de gestion des fluides, comme on l'aperçoit à la même figure 6 et surtout à la figure 5.

A la figure 7C, on voit que la première chambre P1 est aménagée entre la face intérieure B10 et la face extérieure B11, dans l'épaisseur du bloc structurel B1. Elle est allongée dans le sens parallèle à la face intérieure B10 et est délimitée latéralement par une paroi P10, ici cylindrique. Le caractère cylindrique de la chambre n'est bien entendu qu'une commodité de réalisation mécanique ; la chambre pourrait être d'allure parallélépipédique, en étant toujours allongée sensiblement parallèlement à la face intérieure B10.

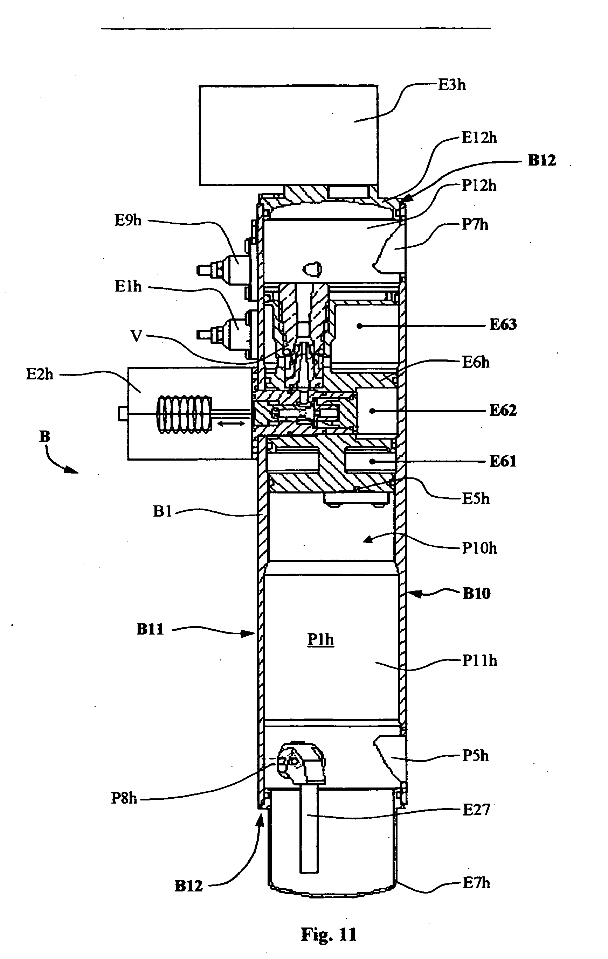

De préférence, afin de faciliter le montage, la chambre P1 traverse tout le bloc structurel B1 et débouche sur des faces périphériques B12 opposées, la chambre P1 étant délimitée par deux organes formant bouchon montés chacun sur l'une des faces périphériques B12, comme par exemple un bouchon E12h et un réceptacle E7h (voir figure 11).

La figure 5 montre une pile à combustible FC selon l'invention et le support S sur lequel elle est montée par un mouvement de rapprochement relatif (voir double flèche F1) qui permet tout à la fois d'établir les différentes connexions de fluides (connections électriques, connexion des gaz et connexion du fluide caloporteur) et de la positionner mécaniquement.

Détaillons les différents circuits de fluide intégrés à la plaque d'extrémité B.

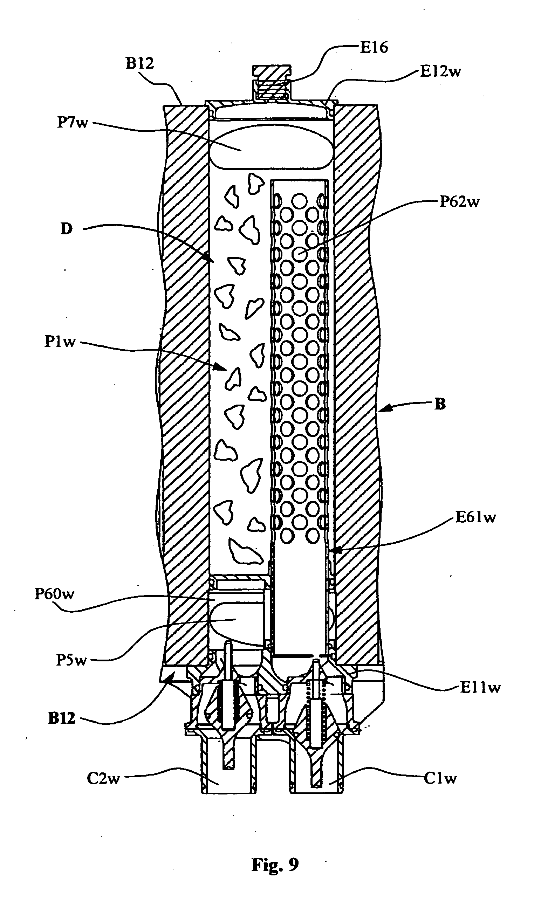

### Circuit d'eau de refroidissement (voir essentiellement la figure 9)

La chambre P1w est délimitée dans sa partie supérieure par un bouchon E12w monté sur une face périphérique B12. Un purgeur E16 est installé sur le bouchon E12w pour évacuer l'éventuelle présence de gaz dans l'eau. Une platine E11 w est montée à l'extrémité inférieure de la chambre P1w. Cette platine E11w reçoit deux raccords auto-obturant C1 w et C2w et elle forme un bouchon obturant la chambre P1 w à l'une de ses extrémités.

La platine E11w comporte une chambre interne P60w communiquant avec l'orifice P5w et avec le raccord C2w. Elle reçoit par ailleurs un tube E61w dont la paroi est pleine sur la hauteur de la chambre interne P60w et comporte de multiples orifices P62w sur une partie s'étendant sensiblement sur toute la longueur de la chambre P1w. Le volume de la chambre P1w à l'extérieur du tube E61w peut recevoir des cristaux d'une composition chimique appropriée pour former le désioniseur D. La chambre P1w forme une nourrice qui communique d'un côté avec l'orifice P7w et de l'autre côté avec le raccord C1w.

L'eau rentre dans la plaque d'extrémité B par le connecteur C1w à la figure 9, traverse un déioniseur D et rentre dans la pile par l'orifice P7w. Comme l'extrémité supérieure du tube E61 w n'est pas occultée, tout le débit ne passe pas au travers des cristaux. Cela permet de limiter la perte de charge. L'observation expérimentale montre que la désionisation est suffisante. En variante, on peut adopter une disposition ressemblant à un filtre, ce qui obligerait la totalité de débit à traverser le désioniseur. Après être passé dans les plaques bipolaires, l'eau revient dans la plaque d'extrémité B par l'orifice P5w, et quitte le système de gestion des fluides par le connecteur C2w à la figure 9. Remarquons que le connecteur C2w est représenté ouvert alors que le connecteur C1w est représenté fermé pour bien montrer leur opération mais, en pratique, ces connecteurs sont ouverts ensemble lorsque la pile à combustible est montée pour être fonctionnelle par exemple dans un véhicule ou ils sont fermés ensemble lorsque la pile à combustible est démontée.

Remarquons encore que, et ceci est un avantage de la présente invention, lors de son passage par le système, l'eau maintient la totalité de la plaque-système B en température.

De préférence, la platine d'extrémité selon l'invention comporte, outre la chambre P1 w formant nourrice d'alimentation en fluide caloporteur, une première (P1 h) et une deuxième (P1o) chambres permettant un agencement de systèmes de gestion pour l'hydrogène et pour l'oxygène comme expliqué ci-dessous (voir par exemple la figure 4).

### Circuit de gaz hydrogène (voir essentiellement la figure 11)

La chambre P1h s'étend entre les orifices P5h et P7h disposés sur la face intérieure B10 du bloc structurel B1. La chambre P1 h est délimitée dans sa partie supérieure par un bouchon E12h monté sur une face périphérique B12. Un capteur de pression E3h est installé sur le bouchon E12h. La chambre P1h est délimitée dans sa partie inférieure par un réceptacle de collecte d'eau E7h, monté sur la partie inférieure de la face périphérique B12 du bloc structurel B1.

Un connecteur C1 h est installé sur la partie inférieure de la face périphérique B12 (figure 5). Ce connecteur C1 h est monté sur un perçage formant ladite canalisation d'alimentation P2h d'alimentation de la pile en gaz hydrogène (voir aussi la figure 7C - vue de dessus du bloc structurel B1- pour repérer les différents perçages dont la canalisation d'alimentation P2h). La canalisation d'alimentation P2h est reliée à un autre perçage formant une canalisation auxiliaire P3h débouchant sur un orifice de purge, ladite canalisation auxiliaire étant disposée sensiblement parallèlement à la canalisation d'alimentation, et connectée à celle-ci au moins par un clapet de surpression E1 h (figure 5). La canalisation auxiliaire P3h est ensuite reliée à l'extérieur du véhicule via le connecteur C2h (figure 5, figure 6). Un tube plongeur de purge E27 (figure 11) est installé dans le réceptacle d'eau E7h et est relié à une électrovanne de purge E10h (figures 5 et 6) qui communique avec la canalisation auxiliaire P3h, via un perçage de purge P8h perpendiculaire à la canalisation auxiliaire P3h.

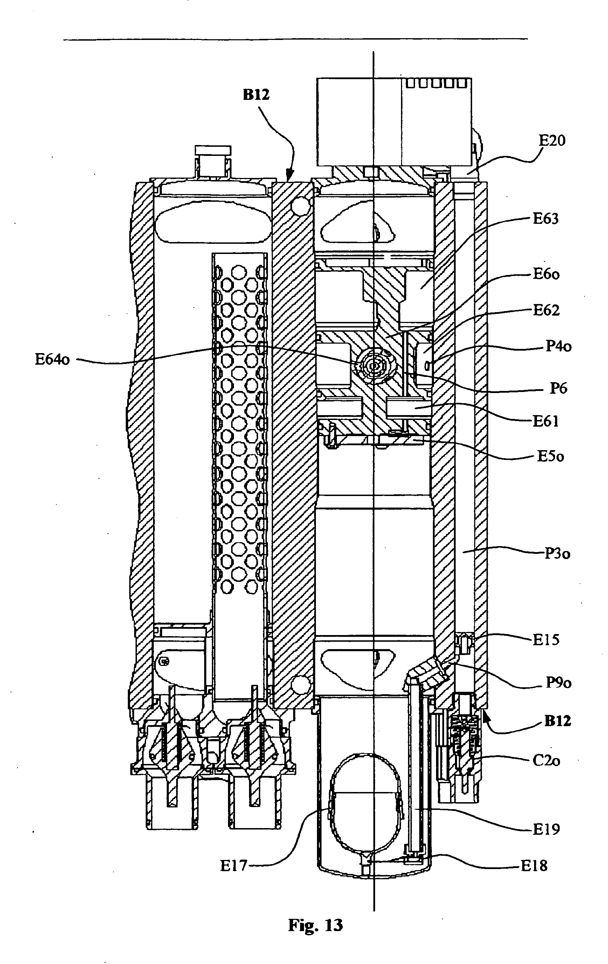

La canalisation d'alimentation P2h aboutit sur la paroi P10h de la chambre P1 h (figure 13) via un passage P4h percé perpendiculairement à la canalisation d'alimentation P2h (voir figure 7C). Un corps de recirculation E6h (Fig. 11) est positionné à l'intérieur de la chambre P1h de façon étanche sur la paroi P10h et à hauteur du passage P4h. Le corps E6h sépare la chambre P1h en une partie d'alimentation P12h en gaz aboutissant à l'orifice P7h et une partie P11h de recirculation du gaz aboutissant à l'orifice P5h.

Pour une meilleure compréhension de la constitution du corps de recirculation E6, le lecteur est invité à se reporter à la figure 13 qui montre, en coupe par un plan perpendiculaire au plan de la figure 11, le corps de recirculation E6o utilisé dans la chambre P1o du circuit d'oxygène. Les corps E6h et E6o et les dispositifs et moyens qu'ils contiennent sont identiques. Chaque corps de recirculation E6 comporte une première cavité E61, une deuxième cavité E62 et une troisième cavité E63. La deuxième cavité E62 communique avec le passage P4 (voir P4o à la figure 13, le passage P4h pour l'hydrogène n'étant pas visible à la figure 11) d'une part et avec un trou E64 (voir E64o à la figure 13, l'équivalent pour le circuit d'hydrogène n'étant pas visible à la figure 11) communiquant avec l'électrovanne E2h (figures 5, 10 et 11) régulatrice de pression. La figure 7C montre les passages P4h et P4o, sans montrer d'autres détails constructifs de même nature pour ne pas la surcharger.

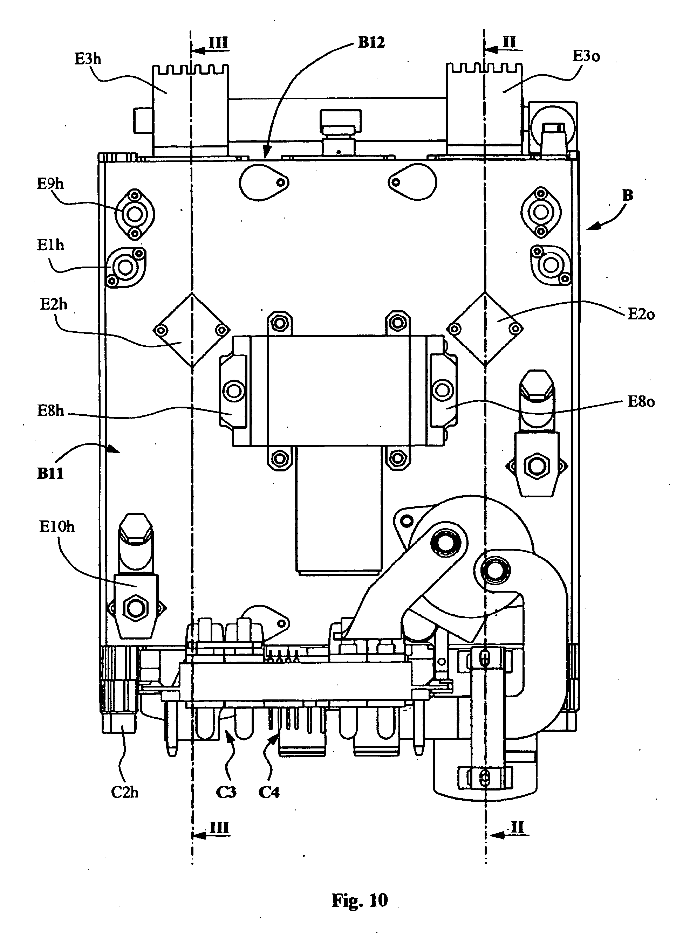

Un clapet anti retour E5 est monté sur le corps de recirculation E6 entre la partie P11 (recirculation) de la chambre P1 et la première cavité E61. Un perçage P6 fait communiquer la première cavité E61 et troisième cavité E63. Par ailleurs, une pompe de recirculation E8h (figures 5 et 10) est montée sur le bloc structurel B1 de façon à ce que son côté aspiration communique avec la partie P11 de la chambre P1 h et son côté refoulement communique avec la première cavité E61. A titre purement illustratif, on peut utiliser aussi bien du côté oxygène que du côté hydrogène une pompe à membrane. Avantageusement, un seul moteur électrique E14 entraîne simultanément les deux pompes à membranes E8h et E8o.

L'électrovanne E2 communique (vers le haut sur les figures 11 et 13, c'est-à-dire en aval par rapport à la circulation du gaz) avec un évidement aboutissant à un convergeant-divergeant formant dispositif à effet Venturi V. La cavité E63 communique avec la zone extérieure au convergeant.

L'hydrogène gazeux arrive par le connecteur C1 h et traverse la canalisation d'alimentation P2h de la pile en gaz hydrogène où il est réchauffé au contact de la plaque d'extrémité maintenue à la température de fonctionnement de la pile à combustible. Le gaz est acheminé par la canalisation d'alimentation P2h vers le corps de recirculation E6h. Le gaz parvient (sous une pression régulée par la vanne E2h) dans la chambre P12h. On fixe une consigne de pression pour la partie supérieure P12h de la chambre P1h. Il s'agit en fait de la pression désirable à l'entrée de l'empilage A de cellules élémentaires.

Le gaz recirculé est constitué par l'excédent de gaz non consommé qui ressort de la pile par l'orifice P5h (figure 11). Arrivé dans la partie P11h de la chambre P1 h, l'eau liquide éventuellement présente dans le gaz tombe par gravité dans le réceptacle E7h. Les éventuels résidus d'eau sont évacués à l'extérieur du système en actionnant l'électrovanne E10h par exemple à intervalles réguliers. Le gaz recirculé passe par le clapet anti retour E5h pour accéder à la cavité E61, d'où il peut passer librement dans la cavité E63. Le dispositif à effet Venturi V forme le moyen permettant de mélanger le gaz neuf présent dans la cavité E62 et le gaz recirculé présent dans la cavité E63 et permettant d'acheminer le mélange dans la partie P12h de la chambre P1h puis vers l'orifice P7h.

A faible puissance, la recirculation du gaz par l'effet Venturi n'est plus suffisante, et la pompe de recirculation E8h est mise en fonction. Elle aspire le gaz dans la partie P11h de la chambre P1h, et le refoule dans la cavité E61 de la chambre P1h. Dans ces conditions, le clapet anti retour E5h est fermé.

Ainsi, en partant du bas vers le haut, on peut distinguer plusieurs étages dans la chambre P1 h : un premier étage en dessous de l'orifice P5h, un deuxième étage entre l'orifice P5h et le corps de recirculation, un troisième étage qui correspond à la deuxième cavité E62, un quatrième étage qui correspond à la troisième cavité E63 et un cinquième étage entre le corps de recirculation et l'orifice P7h. Un capteur de pression E3h (figure 5) est monté sur le bloc structurel pour relever la pression régnant dans ce 5^{ème} étage.

On vient de décrire comment on peut intégrer à une plaque d'extrémité le système de gestion de l'hydrogène alimentant une pile à combustible. De préférence, la plaque d'extrémité B comporte une deuxième chambre P1 permettant un agencement semblable à l'agencement de la première chambre P1 h, le circuit de gaz associé à l'une (P1 h) des chambres étant le circuit d'hydrogène et le circuit de gaz associé à la deuxième P1o des chambres étant le circuit d'oxygène (ici de l'oxygène pur).

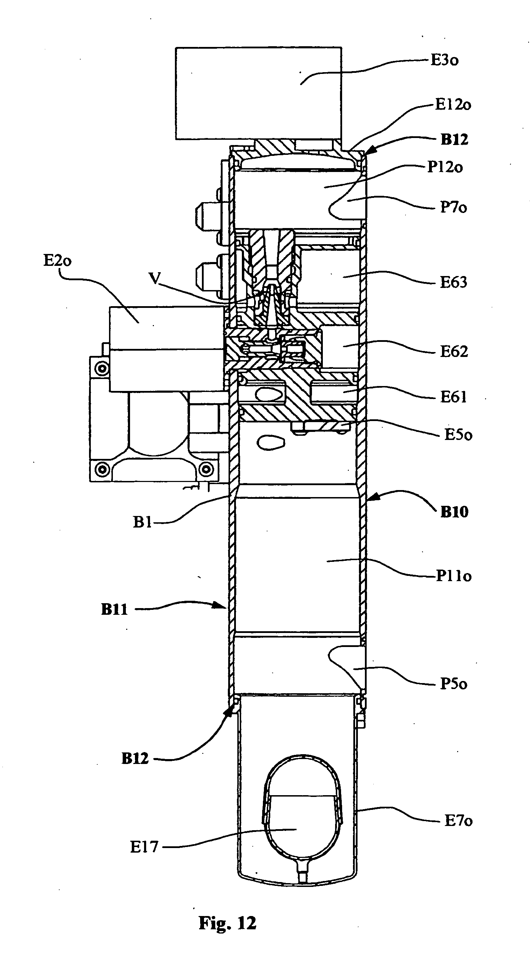

### Circuit de gaz oxygène (voir essentiellement les figures 12 et 13)

Le système oxygène est identique au système hydrogène, sauf les points suivants :
a. les purges se font directement à l'atmosphère via l'électrovanne E10o (figure 5). Pour cela, le haut du perçage P3o est muni d'un filtre E20 laissant sortir librement l'oxygène. Un bouchon E15 sépare le haut et le bas du perçage P3o. Le bas du perçage P3o est utilisé pour évacuer l'eau du réceptacle E7o.
b. coté cathode (oxygène), il y a une production importante d'eau sous forme liquide. Cette eau sortant de la pile tombe par gravité au fond d'un réceptacle E7o. Un flotteur E17 commande l'ouverture E18 de l'entrée du tube plongeur E19. Ce tube plongeur E19 est relié au percement P9o puis au perçage P3o. De là, l'eau est acheminée via le connecteur C2o à l'extérieur du système.

### Partie électrique (voir essentiellement la figure 5)

Les fonctions du système sont contrôlées de manière électrique. Pour cela, on peut avantageusement installer à proximité ou sur la plaque d'extrémité selon l'invention un module électronique E25 de gestion de la pile à combustible. De préférence, la plaque d'extrémité selon l'invention supporte également un connecteur multibroche C4 pour relier à l'extérieur le module électronique de gestion E25. L'unité de contrôle E25 est placée sur le haut du bloc structurel B1. Elle reçoit les informations des différents capteurs (liste non exhaustive : capteurs de pression E3h et E3o, mesure de courant E21, détecteur de taux d'hydrogène E26,...). L'unité de contrôle recueille ces informations et agit sur les différents organes (bobines des régulateurs de pression E2h et E2o, électrovannes de purge E10h et E10o, moteur de pompe E14, contacteur de sécurité E22. De préférence, la plaque d'extrémité selon l'invention comporte en outre deux connecteurs électriques C3 de puissance destinés au courant délivré par la pile à combustible. Enfin, selon un mode de réalisation préféré, l'ensemble des connecteurs électriques et raccords d'alimentation en gaz ou en fluide caloporteur sont agencés de façon à pouvoir être accouplés par un seul mouvement linéaire de rapprochement relatif entre ladite plaque et un support S destiné à la recevoir (voir figure 5).

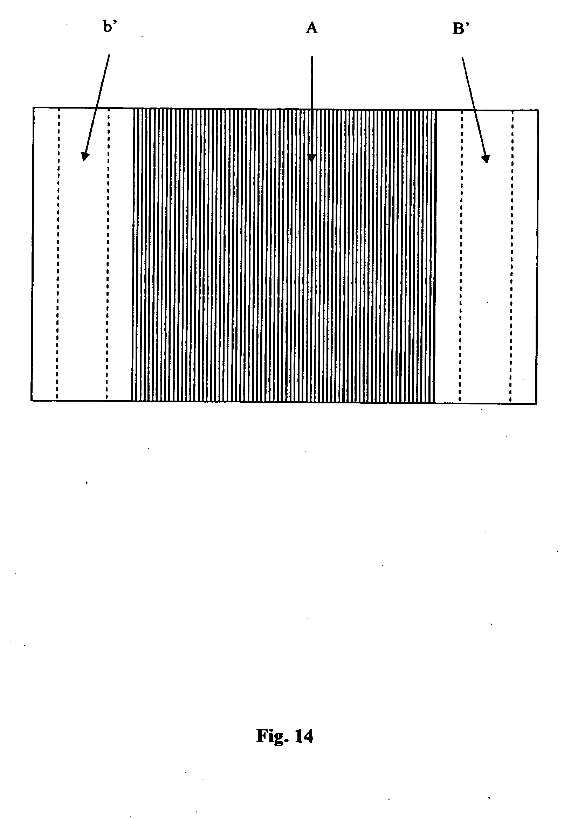

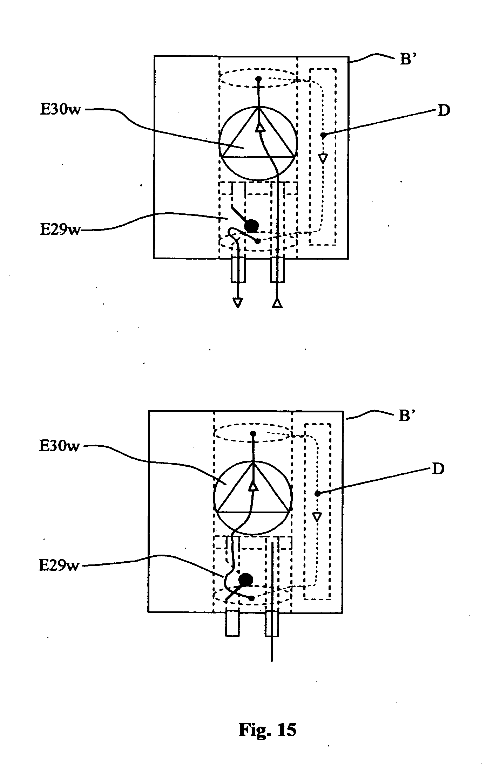

La figure 14 illustre une variante de réalisation de l'invention dans laquelle aussi bien la plaque d'extrémité B' que la plaque d'extrémité b' comportent des éléments de gestion des fluides utilisés par la pile. Par exemple, la gestion du fluide caloporteur est intégrée à l'une des plaques d'extrémité et la gestion des gaz est intégrée à l'autre des plaques d'extrémité. Cela peut faciliter l'implantation d'un thermostat E29w et d'une pompe de circulation E30w du fluide caloporteur comme illustré aux figures 15 et 16. La figure 15 schématise la configuration du thermostat E29w lorsque la pile doit être refroidie. Le fluide caloporteur ayant traversé l'empilage A est renvoyé à l'extérieur vers un radiateur. La figure 16 schématise la configuration du thermostat E29w lorsque la pile est froide. Le fluide caloporteur ayant traversé l'empilage est directement repris par la pompe pour circuler en circuit fermé seulement à l'intérieur de l'empilage afin de rendre homogène son échauffement progressif.

En conclusion, soulignons que l'intérêt de l'invention réside notamment dans la suppression de nombreux raccords, connexions, joints ou soudures, sources de non fiabilité outre les coûts de réalisation industrielle que cela entraîne. Le schéma du ou des systèmes de gestion du ou des fluides n'est pas en soi abordé par la présente invention. Selon le déposant, le principe de réalisation d'une plaque système compacte exposé ici semble compatible avec de nombreux schémas de système de gestion de fluide, sinon tous, quitte à ce que certains éléments ne soient pas intégrés ou montés sur une telle plaque d'extrémité. L'invention facilite aussi le remplacement de l'empilage de cellules électrochimiques en récupérant la ou les plaques d'extrémité, par exemple en prévoyant un raccordement par un système à montage rapide capable de développer une pression de contact suffisante entre empilage et plaque d'extrémité comme par exemple un système à genouillère. Une plaque système selon l'invention pourrait aussi être adaptée pour connecter et être insérée entre deux empilages de cellules élémentaires.

## Revendications

1. Plaque d'extrémité (B) pour pile à combustible, la plaque d'extrémité comportant un bloc structurel (B1) comportant une face intérieure (B10) destinée à être mise en appui contre un empilage de cellules élémentaires, comportant une face extérieure (B11) opposée à la face intérieure et une ou plusieurs face(s) périphérique(s) (B12), la face intérieure comportant au moins deux orifices (P5 et P7) destinés à l'alimentation d'un circuit situé dans la pile pour un gaz, le bloc structurel (B1) comportant une chambre (P1) et comportant une canalisation d'alimentation (P2) aboutissant sur une paroi de la chambre (P1), **caractérisée en ce que** :
• la chambre (P1) est aménagée entre la face intérieure (B10) et la face extérieure (B11), et est délimitée du côté de la face intérieure (B10) et de la face extérieure (B11) par une paroi (P10) du bloc structurel (B1), la chambre étant allongée sensiblement parallèlement à la face intérieure (B10), la chambre (P1) débouche sur une face périphérique (B12), la chambre (P1) étant délimitée par au moins un bouchon (E12) monté sur ladite face périphérique (B12) ;
• un corps de recirculation (E6) est monté à l'intérieur de la chambre (P1), positionné là où aboutit la canalisation d'alimentation (P2), le corps de recirculation (E6) étant monté de façon étanche sur la paroi de la chambre pour séparer la chambre (P1) en une partie de recirculation du gaz (P11) aboutissant à l'un (P5) des orifices et une partie d'alimentation (P12) aboutissant à l'autre (P7) des orifices, le corps de recirculation (E6) comportant un élément de mélange permettant de mélanger le gaz neuf provenant de la canalisation d'alimentation (P2) et le gaz provenant de la partie de recirculation (P11) et permettant d'acheminer le mélange vers l'autre orifice (P7).

2. Plaque d'extrémité selon la revendication 1 dans laquelle la chambre (P1) traverse tout le bloc structurel (B1) et débouche sur des faces périphériques (B12) opposées, la chambre (P1) étant délimitée par deux bouchons (E12) montés chacun sur l'une des faces périphériques (B12).

3. Plaque d'extrémité selon la revendication 1 ou 2 dans laquelle toutes les canalisations d'alimentation et d'évacuation (P2, P3) sont aménagées entre la face intérieure (B10) et la face extérieure (B11), sont allongées sensiblement parallèlement à la face intérieure (B10), et débouchent sur la même face périphérique (B12) que la chambre (P1).

4. Plaque d'extrémité selon l'une des revendications 1 à 3, dans laquelle la chambre (P1h) est délimitée, à son extrémité opposée au corps de recirculation (E6h), par un réceptacle (E7h) de collecte d'eau, et comporte un tube plongeur de purge (E27) installé dans le réceptacle d'eau (E7h) et relié à une l'électrovanne de purge (E10h).

5. Plaque d'extrémité selon l'une des revendications 1 à 3, dans laquelle la chambre (P1o) est délimitée, à son extrémité opposée au corps de recirculation, par un réceptacle (E7o) de collecte d'eau, et comporte un tube plongeur (E19) pour l'évacuation de l'eau produite, dont l'ouverture est commandée par un flotteur (E17).

6. Plaque d'extrémité selon l'une des revendications 1 à 5, comportant une canalisation auxiliaire (P3) débouchant sur un orifice de purge, ladite canalisation auxiliaire étant disposée sensiblement parallèlement à la canalisation d'alimentation (P2), et connectée à celle-ci au moins via un clapet de surpression (E1).

7. Plaque d'extrémité selon l'une des revendications 1 à 6, comportant une deuxième chambre permettant un agencement semblable à l'agencement d'une première chambre, le circuit de gaz associé à l'une (P1h) des chambres étant le circuit de gaz hydrogène et le circuit de gaz associé à l'autre (P1o) des chambres étant le circuit d'air ou d'oxygène.

8. Plaque d'extrémité selon l'une des revendications 1 à 7, comportant en outre deux connecteurs électriques de puissance (C3) destinés au courant délivré par la pile à combustible.

9. Plaque d'extrémité selon la revendication 8, caractérisée en ce l'ensemble des connecteurs électriques et raccord d'alimentation en gaz ou en fluide caloporteur sont agencés de façon à pouvoir être accouplées par un seul mouvement linéaire de rapprochement relatif entre ladite plaque et un support destiné à la recevoir.

10. Pile à combustible (FC) comportant un empilage (A) de plaques bipolaires et de membranes échangeuses d'ions disposées en alternance, l'empilage (A) étant enserré entre deux plaques d'extrémité (B et C), l'une des plaques d'extrémité étant conforme à l'une des revendications 1 à 9.

11. Pile à combustible selon la revendication 10, dans laquelle des éléments pour contrôler certains paramètres de fonctionnement sont montés sur ou intégrés dans l'une des plaques d'extrémité.

12. Pile à combustible selon la revendication 11, dans laquelle des éléments pour recycler les gaz non consommés par la pile sont montés sur ou intégrés dans l'une des plaques d'extrémité.

13. Pile à combustible selon la revendication 12, dans laquelle des éléments pour éliminer l'eau produite par la pile sont montés sur ou intégrés dans l'une des plaques d'extrémité.

14. Pile à combustible selon la revendication 10, dans laquelle des éléments pour distribuer un fluide caloporteur sont montés sur ou intégrés dans l'une des plaques d'extrémité.

## Claims

1. Endplate (B) for a fuel cell, the endplate comprising a structural block (B1) having an internal face (B10) designed to bear against a stack of individual cells, with an external face (B11) opposite to the internal face and one or more peripheral faces (B12), the internal face having at least two orifices (P5 and P7) designed to feed a gas circuit located inside the cell, the structural block (B1) comprising a first chamber (P1) and comprising a feed duct (P2) ending at a wall of the chamber (P1), **characterized in that**:
• the first chamber (P1) is provided between the internal face (B10) and the external face (B11), and is delimited on the side of the internal face (B10) and of the external face (B11) by a wall (P10) of the structural block (B1), the chamber being elongated roughly parallel to the internal face (B10), the chamber (P1) opens onto a peripheral face (B12), the chamber (P1) being delimited by at least one plug (E12) mounted on said peripheral face (B12);
• a recirculation body (E6) is fitted inside the chamber (P1), positioned at the point where the feed duct (P2) ends, the recirculation body (E6) being mounted hermetically on the wall of the chamber to separate the chamber (P1) into a gas recirculation part (P11) terminating at one (P5) of the orifices and a feed part (P12) terminating at the other (P7) orifice, the recirculation body (E6) comprising a mixing element for mixing the new gas originating from the feed duct (P2) and the gas originating from the recirculation part (P11) and enabling the mixture to be directed to the other orifice (P7).

2. Endplate according to Claim 1, in which the chamber (P1) passes through the entire structural block (B1) and opens onto opposite peripheral faces (B12), the chamber (P1) being delimited by two closures (E12) each mounted on one of the peripheral faces (B12).

3. Endplate according to Claim 1 or 2, in which all the feed and discharge ducts (P2, P3) are provided between the internal face (B10) and the external face (B11), are elongated roughly parallel to the internal face (B10), and open onto the same peripheral face (B12) as the chamber (P1).

4. Endplate according to one of Claims 1 to 3, in which the chamber (P1h) is delimited, at its end opposite to the recirculation body (E6h), by a water collection receptacle (E7h), and comprises a purging dip pipe (E27) fitted inside the water receptacle (E7h) and connected to a purging solenoid valve (E10h).

5. Endplate according to one of Claims 1 to 3, in which the chamber (P1o) is delimited, at its end opposite to the recirculation body, by a water collection receptacle (E7o), and comprises a dip pipe (E19) to discharge the water produced, the opening of which is controlled by a float (E17).

6. Endplate according to one of Claims 1 to 5, comprising an auxiliary duct (P3) opening onto a purging orifice, said auxiliary duct being arranged substantially parallel to the feed duct (P2), and connected to the latter at least via a pressure relief valve (E1).

7. Endplate according to one of Claims 1 to 6, comprising a second chamber enabling an arrangement similar to the arrangement of the first chamber, the gas circuit associated with one (P1h) of the chambers being the hydrogen gas circuit and the gas circuit associated with the other (P1o) of the chambers being the air or oxygen circuit.

8. Endplate according to one of Claims 1 to 7, also comprising two electrical power connectors (C3) designed for the current delivered by the fuel cell.

9. Endplate according to one of Claims 1 to 8, **characterized in that** all the electrical connectors and gas or coolant feed couplings are arranged so that they can be coupled simply by a linear relative approach movement between said plate and a support designed to receive it.

10. Fuel cell (FC) comprising a stack (A) of bipolar plates and ion exchange membranes arranged alternately, the stack (A) being clamped between two endplates (B and C), one of the endplates conforming to one of Claims 1 to 9.

11. Fuel cell according to Claim 10, in which elements for controlling certain operating parameters are fitted on or integrated in one of the endplates.

12. Fuel cell according to Claim 11, in which elements for recycling the gases not consumed by the cell are fitted on or integrated in one of the endplates.

13. Fuel cell according to Claim 12, in which elements for eliminating the water produced by the cell are fitted on or integrated in one of the endplates.

14. Fuel cell according to Claim 10, in which elements for distributing a coolant are fitted on or integrated in one of the endplates.

## Patentansprüche

1. Endplatte (B) für Brennstoffzelle, wobei die Endplatte einen Strukturblock (B1) umfasst, der eine Innenseite (B10), die dazu gedacht ist, sich an einem Stapel von Elementarzellen abzustützen, und eine Außenseite (B11), die der Innenseite gegenüberliegt, und eine oder mehrere umlaufende Seiten (B12) umfasst, wobei die Innenseite mindestens zwei Öffnungen (P5 und P7) umfasst, die dazu gedacht sind, einen in dem Stapel befindlichen Kreislauf für ein Gas zu versorgen, wobei der Strukturblock (B1) eine Kammer (P1) umfasst und eine Versorgungsleitung (P2) umfasst, die zu einer Wand der Kammer (P1) führt, **dadurch gekennzeichnet, dass**:
- die Kammer (P1) wischen der Innenseite (B10) und der Außenseite (B11) eingerichtet ist, und auf der Seite der Innenseite (B10) und der Außenseite (B11) durch eine Wand (P10) des Strukturblocks (B1) begrenzt ist, wobei sich die Kammer im Wesentlichen parallel zur Innenseite (B10) ausdehnt, die Kammer (P1) in eine umlaufende Seite (B12) mündet, wobei die Kammer (P1) von mindestens einem Stopfen (E12) begrenzt ist, der auf der umlaufenden Seite (B12) montiert ist;
- ein Rückführungskörper (E6) im Innern der Kammer (P1) montiert ist, der dort positioniert ist, wo die Versorgungsleitung (P2) ausmündet, wobei der Rückführungskörper (E6) abdichtend an der Wand der Kammer montiert ist, um die Kammer (P1) in einen Gasrückführungsteil (P11), der an einer (P5) der Öffnungen ausmündet, und in einen Versorgungsteil (P12), der an der anderen (P7) der Öffnungen ausmündet, zu trennen, wobei der Rückführungskörper (E6) ein Mischelement umfasst, das es ermöglicht, das frische Gas, das aus der Versorgungsleitung (P2) stammt, und das Gas, das aus dem Rückführungsteil (P11) stammt, zu mischen, und die Beförderung der Mischung zu der anderen Öffnung (P7) ermöglicht.

2. Endplatte nach Anspruch 1, wobei die Kammer (P1) durch den ganzen Strukturblock (B1) geht und in die gegenüberliegenden umlaufenden Seiten (B12) einmündet, wobei die Kammer (P1) durch zwei Stopfen (E12) begrenzt ist, die jeweils auf einer der umlaufenden Seiten (B12) montiert sind.

3. Endplatte nach Anspruch 1 oder 2, wobei alle Versorgungs- und Ablasskanäle (P2, P3)zwischen der Innenseite (B10) und der Außenseite (B11) eingerichtet sind, sich zur Innenseite (B10) im Wesentlichen parallel ausdehnen und in die gleiche umlaufende Seite (B12) wie die Kammer (P1) einmünden.

4. Endplatte nach einem der Ansprüche 1 bis 3, wobei die Kammer (P1h) an ihrem Ende gegenüber dem Rückführungs körper (E 6 h) von einem Wassersammelbehälter (E7h) begrenzt ist und ein Entleerungstauchrohr (E27) umfasst, das in dem Wasserbehälter (E7h) installiert ist und mit einem Entleerungsmagnetventil (E10h) verbunden ist.

5. Endplatte nach einem der Ansprüche 1 bis 3, wobei die Kammer (P1o) an ihrem Ende gegenüber dem Rückführungskörper von einem Wassersammelbehälter (E7o) begrenzt ist und ein Tauchrohr (E19) für das Ablassen des erzeugten Wassers umfasst, dessen Öffnung durch einen Schwimmer (E17) gesteuert ist.

6. Endplatte nach einem der Ansprüche 1 bis 5, umfassend eine Hilfsleitung (P3), die in eine Entleerungsöffnung einmündet, wobei die Hilfsleitung im Wesentlichen parallel zur Versorgungsleitung (P2) angeordnet ist und damit über mindestens eine Unterdrückungsklappe (E1) verbunden ist.

7. Endplatte nach einem der Ansprüche 1 bis 6, umfassend eine zweite Kammer, die eine Anordnung ähnlich wie die Anordnung einer ersten Kammer ermöglicht, wobei der Gaskreislauf, der einer (P1h) der Kammern zugeordnet i s t , der Wasserstoffgaskreislauf ist, und der Gaskreislauf, welcher der anderen (P1o) der Kammern zugeordnet ist, der Luft- oder Sauerstoffkreislauf ist.

8. Endplatte nach einem der Ansprüche 1 bis 7, ferner umfassend zwei elektrische Leistungsverbinder (C3), die für den Strom gedacht sind, der von der Brennstoffzelle abgegeben wird.

9. Endplatte nach Anspruch 8, **dadurch gekennzeichnet, dass** alle elektrischen Verbinder und der Anschluss zur Versorgung mit Gas oder mit einem Wärmeübertragungsmittel derart angeordnet sind, dass sie mit einer einzigen linearen Belegung zur relativen Annäherung zwischen der Platte und einem Träger, der zu zur Aufnahme derselben gedacht ist, gekoppelt werden können.

10. Brennstoffzelle (FC), umfassend einen Stapel (A) von bipolaren Platten und Ionenaustauschmembranen, die abwechselnd angeordnet sind, wobei der Stapel (A) zwischen zwei Endplatten (B und C) eingeklemmt ist, wobei eine der Endplatten einem der Ansprüche 1 bis 9 entspricht.

11. Brennstoffzelle nach Anspruch 10, wobei Elemente zum Steuern bestimmter Betriebsparameter auf einer der Endplatten montiert oder darin integriert sind.

12. Brennstoffzelle nach Anspruch 11, wobei Elemente zum Wiederverwerten der Gase, die von der Zelle nicht verbraucht wurden, auf einer der Endplatten montiert oder darin integriert sind.

13. Brennstoffzelle nach Anspruch 12, wobei Elemente zum Beseitigen des Wassers, das von der Zelle erzeugt wird, auf einer der Endplatten montiert oder darin integriert sind.

14. Brennstoffzelle nach Anspruch 10, wobei Elemente zum Verteilen eines Wärmeübertragungsmittels auf einer der Endplatten montiert oder darin integriert sind.
